# EUROPÄISCHE PATENTSCHRIFT

(11) **EP 3 578 039 B1**
(45) Veröffentlichungstag und Bekanntmachung des Hinweises auf die Patenterteilung: **13.01.2021**
(21) Anmeldenummer: 18176781.5
(22) Anmeldetag: 08.06.2018
(51) Int. Cl.: A01K 1/015

(54) **EINSTREU ZUR NUTZUNG IN DER TIERHALTUNG**
BEDDING FOR USE IN THE KEEPING OF LIVESTOCK
LITIÈRE DESTINÉE À ÊTRE UTILISÉE DANS UN ÉLEVAGE

(43) Veröffentlichungstag der Anmeldung: 11.12.2019
(73) Patentinhaber: Catural GmbH, 68169 Mannheim (DE)
(72) Erfinder: EHLER, Josef Immanuel, 68169 Mannheim (DE); BINDEWALD, Patrick, 76829 Landau (DE); ESTRADER TORRAS, Alberto, 86641 Rain am Lech (DE)
(74) Vertreter: STT Sozietät Thews & Thews

(56) Entgegenhaltungen:
- WO-A1-2016/016758
- WO-A1-2017/067639

## Beschreibung

Die vorliegende Erfindung betrifft eine Einstreu zur Nutzung in der Tierhaltung, die Verwendung der Einstreu und ein Verfahren zur Herstellung einer Einstreu.

Einstreu ist ein Material, das in der Tierhaltung genutzt wird, um in Stallungen und Käfigen den Boden abzudecken und die Ausscheidungen der Tiere aufzunehmen. Verwendet werden organische und mineralische Materialien, meist kostengünstige landwirtschaftliche oder industrielle Nebenprodukte oder preiswerte Rohstoffe. Zu den traditionellen und weit verbreiteten Materialien zählen Stroh, Holzspäne aus Harthölzern (wie Buchen oder Espen) und aus Weichhölzern (wie Kiefern und Zedern) sowie Mineralien bzw. Tonerden.

Eine ökonomische Verwendung der Einstreu ist gewährleistet, wenn nach der Benetzung der Streuschicht durch die Körperflüssigkeit des Tieres diese nicht durch die gesamte Streuschicht hindurchsickert, was eine Erneuerung der gesamten Streuschicht erforderlich machen würde. Dabei kleben die von der Flüssigkeit erfassten oberen Anteile zusammen, so dass sich oben auf der Einstreuschicht Klumpen oder plattenförmige weiche Brocken bilden, die als oberste Lage mit einer Streuschaufel von der Einstreuschicht entfernt werden können, ohne dass die darunterliegenden Schichten in Mitleidenschaft gezogen werden. Die Verunreinigung durch die Körperflüssigkeit wird also auf einen kleinen Bereich beschränkt, während der Rest unversehrt bleibt. Erzielt wird diese Wirkung, indem die Einstreu selbst Klumpenbildungseigenschaften aufweist.

Bekannte ökologische Einstreu besteht meist aus Holzmehlen und Gelbildnern. Holzmehle wirken als Trenn- und Bindemittel in einer Einstreu und Gelbildner dienen als Flüssigkeitsabsorber und Klumpenverfestiger.

DE 601 14 237 beschreibt eine Einstreu ohne Gelbildner, die Holzmehl und Getreidemehl umfasst. Eine derartige Einstreu zeigt zwar sehr geringe Verklebungen, jedoch verhärten die Produkte nicht und weisen daher eine ungenügende Klumpenfestigkeit auf. WO-A-2017067639 und WO-A-2016016758 offenbaren Streugemische enthaltend Getreidemehl und einen Gelbildner.

Angesichts dieser bekannten Einstreu ist es wünschenswert, eine Einstreu bereitzustellen, die nicht die oben genannten, nachteiligen Eigenschaften aufweist.

Der vorliegenden Erfindung liegt daher die Aufgabe zugrunde, eine Einstreu bereitzustellen, die Klumpenbildung mit hoher Klumpenfestigkeit ermöglicht, eine geringe Verklebung an Tierhaaren verursacht und darüber hinaus eine hohe Geruchsbindungswirkung aufweist und ein Verfahren zur Herstellung einer solchen Einstreu.

Diese Aufgabe wird durch die in den Ansprüchen gekennzeichneten Ausführungsformen gelöst.

Ein erster Aspekt der Erfindung betrifft eine Einstreu zur Nutzung in der Tierhaltung in der Form eines gepressten Granulats mit einer Partikelgröße von 0,1 bis 10 mm, bestehend aus 65 bis 99,5 Gew.-% Getreidemehl, 0,1 bis 20 Gew.-% eines Gelbildners, der aus mindestens einem Bestandteil der Gruppe, bestehend aus Guarkernmehl, Johannisbrotkernmehl, Tarakernmehl, Xanthan, Gellan, Karaya, Alginat, Agar, Carrageen, Gummi arabicum, Pektin, Traganth und Celluloseether, ausgewählt ist, und 0,01 bis 15 Gew.-% eines Geruchsminderers, der aus mindestens einem Bestandteil der Gruppe, bestehend aus Chlorid und Säure, ausgewählt ist, wobei die vorstehenden Bestandteile immer jeweils 100 Gew.-% ausmachen.

Erfindungsgemäß wird unter "Getreidemehl" ein Mühlennachmehl oder Mühlentypenmehl verstanden, bei dem die oberen Schalenschichten größtenteils bzw. nahezu vollständig Müllerei-technisch entfernt wurden, wie es einem Fachmann bekannt ist. Bestandteile der Mühlenprodukte aus Getreide sind Schälkleie, Kleie, Grießkleie, Futternachmehle, Keimlinge und die Typenmehle. Vollkornmehle sind hier ausgeschlossen, da sie keinen Trennungsprozess ausgesetzt sind. Ein Beispiel für das verwendete Getreidemehl ist Type 2000 Nachmehl. Type 2000 Nachmehl wird üblicherweise nicht als Nahrungsmittel für Menschen verwendet.

Das Getreidemehl kann in Form eines Quellmehls verwendet werden. Quellmehl ist ein extrudiertes Mehl oder auch ein chemisch aufgeschlossenes Mehl. Im Extruder wird ein Wasser-Mehl-Gemisch unter hohem Druck und hoher Temperatur gleichmäßig aus einer formgebenden Öffnung herausgepresst, so dass die Stärke im Quellmehl durch den Extrudierprozess thermisch aufgeschlossen wird. Durch diesen thermischen Aufschluss oder durch entsprechende chemische Stärke-Aufschlussprozesse haben Quellmehle ein höheres Wasserbindungsvermögen als unbehandelte Mehle. Das Quellmehl kann aus mindestens einem Getreidemehl hergestellt werden.

Das Getreide kann dabei ein glutenfreies Getreide oder ein glutenhaltiges Getreide sein. Beispielsweise ist das glutenfreie Getreidemehl mindestens ein Mehl eines Bestandteils der Gruppe, bestehend aus Mais, Reis und Hirse.

Das glutenhaltige Getreidemehl kann mindestens ein Mehl eines Bestandteils der Gruppe, bestehend aus Weizen, Dinkel, Roggen, Gerste oder Triticale, sein. Bevorzugt ist die Verwendung von Roggenmehl und/oder Weizenmehl, wobei letzteres besonders bevorzugt durch Proteinverschiebung angereichertes Protein aufweist. Die Verwendung dieser glutenhaltigen Getreide ist vorteilhaft, da das Gluten im Getreidemehl den unerwünschten Geruch in der von Tierurin durchnässten Substanz durch die Ausbildung einer dreidimensionalen Struktur festhält und diesen nicht in die Umgebungsluft entweichen lässt. Die Geruchsbindung kann aber auch durch Pentosane (Schleimstoffe) ermöglicht werden, wie dies beispielsweise für Roggen der Fall ist. Roggen gehört zwar auch zu den glutenhaltigen Getreiden, jedoch überwiegt die Geruchsbindung durch Pentosane.

Wird die Geruchsbindung nicht durch Gluten oder Pentosane erreicht, so kann diese durch quellende Stärke gewährleistet werden. Dies trifft insbesondere für glutenfreies Getreidemehl zu.

Das Getreidemehl weist einen Anteil von 65 bis 99,5 Gew.-%, bevorzugt von 70 bis 95 Gew.-%, besonders bevorzugt von 75 bis 94 Gew.-%, an der Einstreu auf. Die einzusetzende Menge hängt davon ab, wie ausgeprägt der Geruchsbindeeffekt und der Klumpenbildungseffekt in der Einstreu sein sollen. Je mehr Getreidemehl in der Einstreu enthalten ist, desto besser lassen sich die urinbenetzten oberen Anteile als platten- oder schollenförmige Klumpen entfernen und umso besser ist das Geruchsbindevermögen. Die Grenze ergibt sich durch die gewünschte Qualität und den gewünschten Preis der Einstreu.

Erfindungsgemäß besteht die Einstreu zu 0,1 bis 20 Gew.-%, bevorzugt von 2 bis 10 Gew.-%, besonders bevorzugt von 3 bis 5 Gew.-%, aus einem Gelbildner, der aus mindestens einem Bestandteil der Gruppe, bestehend aus Guarkernmehl, Johannisbrotkernmehl, Tarakernmehl, Xanthan, Gellan, Karaya, Alginat, Agar, Carrageen, Gummi arabicum, Pektin, Traganth und Celluloseether, ausgewählt ist.

In der vorliegenden Erfindung ist der Celluloseether nicht besonders eingeschränkt und kann z.B. eines aus Carboxymethylcellulose, Methylcellulose, Ethylcellulose, Hydroxyethylcellulose, Hydroxypropylcellulose, Methylethylcellulose, Hydroxyethylmethylcellulose und Hydroxypropylmethylcellulose sein.

Durch die Kombination von Getreidemehl und Gelbildner kann die Klumpenfestigkeit, die Feuchtigkeitsbindung, die Geruchsverminderung, die Schmierfilmbildung (d.h. das Absickern der Flüssigkeit auf den Boden des mit Einstreu gefüllten Behälters) und die Ergiebigkeit der Einstreu verbessert werden. Allerdings begünstigt ein Anteil von mehr als 20 Gew.-% Gelbildner in der Einstreu die Klebrigkeit der Einstreu an Tierhaaren.

Der Gelbildner ist aus mindestens einem Bestandteil der Gruppe, bestehend aus Guarkernmehl, Johannisbrotkernmehl, Tarakernmehl, Xanthan, Gellan, Karaya, Alginat, Agar, Carrageen, Gummi arabicum, Pektin, Traganth und Celluloseether, ausgewählt. Durch die Verwendung von Gelbildnern kann insbesondere die Klumpenbildung und -stabilität verbessert, die Feuchtigkeitsaufnahme erhöht sowie Geruchsentwicklung und Zersetzungsprozesse der Inhaltsstoffe der Einstreu verhindert werden. Bevorzugt ist Guarkernmehl.

Erfindungsgemäß besteht die Einstreu zu 0,01 bis 15 Gew.-%, bevorzugt zu 0,1 bis 10 Gew.-%, besonders bevorzugt zu 1 bis 6 Gew.-%, aus einem Geruchsminderer, der aus mindestens einem Bestandteil der Gruppe, bestehend aus Chlorid und Säure, ausgewählt ist.

Erfindungsgemäß wird unter dem Begriff "Geruchsminderer" eine Substanz verstanden, die Geruch binden und/oder neutralisieren kann.

In der vorliegenden Erfindung sind das Chlorid und die Säure nicht besonders eingeschränkt, solange sie Geruch binden und/oder neutralisieren können. Bevorzugt ist das Chlorid aus mindestens einem Bestandteil der Gruppe, bestehend aus Calciumchlorid, Magnesiumchlorid und Natriumchlorid, ausgewählt. Gemäß einer weiteren bevorzugten Ausführungsform ist die Säure aus mindestens einem Bestandteil der Gruppe, bestehend aus Ascorbinsäure, Weinsäure und Zitronensäure, ausgewählt. Die Chloride haben zusätzlich zu der Geruchsminderung die vorteilhafte Funktion, dass sie die Schüttdichte der Einstreu verringern können.

In einer Ausführungsform der vorliegenden Erfindung wird Calciumchlorid als Geruchsminderer verwendet, wobei der Anteil von Calciumchlorid 1 bis 10 Gew.-%, bevorzugt 3 bis 5 Gew.-%, in der Einstreu beträgt.

Nach einer weiteren Ausführungsform wird Magnesiumchlorid als Geruchsminderer verwendet, wobei der Anteil von Magnesiumchlorid 1 bis 10 Gew.-%, bevorzugt 4 bis 8 Gew.-%, beträgt. Magnesiumchlorid kann z.B. in Schuppen- oder Pulverform eingesetzt werden.

Einer weiteren Ausführungsform entsprechend, wird Zitronensäure als Geruchsminderer verwendet, wobei der Anteil von Zitronensäure 1 bis 10 Gew.-%, bevorzugt 1 bis 3 Gew.-%, beträgt.

Gemäß einer weiteren Ausführungsform wird Ascorbinsäure als Geruchsminderer mit einem Anteil von 1 bis 10 Gew.-%, bevorzugt 1 bis 3 Gew.-%, verwendet.

Gemäß einer Ausführungsform ist der Geruchsminderer Calciumchlorid und/oder Zitronensäure. Sowohl Calciumchlorid als auch Zitronensäure ermöglichen eine sehr gute Geruchsminderung, die auch über einen langen Zeitraum anhält. Des Weiteren kann durch das Verwenden von Calciumchlorid die Schüttdichte der Einstreu besonders gut verringert werden.

In einer Ausführungsform besteht die Einstreu aus 90 bis 94 Gew.-% Getreidemehl, 3 bis 5 Gew.-% Guarkernmehl und 3 bis 5 Gew.-% Calciumchlorid. Bevorzugt besteht die Einstreu aus 92 Gew.-% Getreidemehl, 4 Gew.-% Guarkernmehl und 4 Gew.-% Calciumchlorid.

Gemäß einer weiteren Ausführungsform besteht die Einstreu aus 92 bis 96 Gew.-% Getreidemehl, 3 bis 5 Gew.-% Guarkernmehl und 1 bis 3 Gew.-% Zitronensäure. Bevorzugt besteht die Einstreu aus 95 Gew.-% Getreidemehl, 4 Gew.-% Guarkernmehl und 1 Gew.-% Zitronensäure.

Gemäß der Erfindung liegt die Einstreu als gepresstes Granulat vor. Bevorzugt ist das gepresste Granulat praktisch abriebfrei. Der hier verwendete Begriff "abriebfrei" bedeutet, dass sich von dem gebildeten Granulat möglichst keine Teilchen lösen, so dass Staubbildung unterdrückt werden kann. Gepresstes, abriebfreies Granulat ist vorteilhaft, da die Einstreu nicht am Fell des Tieres hängenbleibt und in den Wohnraum des Tierhalters herumgetragen wird, wie es für eine pulverförmige Einstreu der Fall wäre. Das gepresste, abriebfreie Granulat kann mit Hilfe der im Stand der Technik verwendeten Verfahren, wie beispielsweise in DE 37 32 807 A1 beschrieben, erhalten werden.

Das Granulat weist eine Partikelgröße von 0,1 bis 10 mm, bevorzugt von 0,1 bis 8 mm und besonders von 0,1 bis 5 mm auf. Die zuvor beschriebene Beschaffenheit der Granulatteilchen verhindert das Umherschleppen der Granulatteilchen durch das Tier und führt zu einer rieselfähigen Einstreu. In einer Laboranalyse im Herstellungsprozess wird durch Absieben der Einstreu in einem Siebbereich von 0,1 bis 1 mm festgestellt, wie groß der Anteil der Partikel ist, der eine Partikelgröße von unter 1 mm aufweist. Je mehr Partikel eine Partikelgröße von unter 1 mm aufweisen, desto flacher wird der gebildete Klumpen in der Anwendung und desto geringer wird die notwendige Produktmenge/Produkthöhe für die Aufnahme von Ausscheidungen von Tieren. Ist beispielsweise der Anteil an Partikeln mit einer Partikelgröße zwischen 0,1 und 1 mm über 5%, so beträgt die Klumpentiefe bei 30 ml Testflüssigkeit etwa 4 cm.

In einer Ausführungsform der Erfindung verbleiben mehr als 2% der Einstreu in einem Sieb mit einer Siebgröße von 0,1 mm bis 1 mm.

Gemäß einer bevorzugten Ausführungsform besteht das gepresste Granulat aus zerkleinerten gepressten Pellets oder aus einem zerkleinerten Extrudat der Ausgangsmasse der Einstreu, bestehend aus 65 bis 99,5 Gew.-% Getreidemehl, 0,1 bis 20 Gew.-% des oben genannten Gelbildners und 0,01 bis 15 Gew.-% des oben genannten Geruchsminderers, welche zu Pellets verpresst oder extrudiert wird. Durch trockene Verarbeitung der Ausgangsmasse zu gepressten Pellets oder zu einem Extrudat wird die Stärke des Getreidemehls beschädigt, was zu einer erhöhten Flüssigkeitsaufnahmefähigkeit der Einstreu führt. Insbesondere weist ein solches gepresstes Getreidemehl eine gesteigerte Flüssigkeitsaufnahme von bis zum 7-Fachen des Eigengewichts auf, so dass durch das Pressen eine besonders effektive Flüssigkeitsaufnahme erreicht werden kann.

Das so hergestellte Granulat verklebt sich durch Kontakt mit einer Flüssigkeit, wie beispielsweise Tierausscheidungen, ineinander, so dass innerhalb kürzester Zeit Teigklumpen entstehen, die innerhalb von etwa 2 Stunden erhärten und schon nach ungefähr einer Minute nach dem Kontakt mit der Flüssigkeit leicht entfernt werden können. Die schnelle Teigbildung ist begünstigt durch die Stärkeschädigung, die durch das Pressen der Pellets oder durch das Extrudieren des Getreidemehls hervorgerufen wird.

Einer Ausführungsform entsprechend weisen die Pellets jeweils einen Durchmesser von 5 bis 8 mm, bevorzugt von 5,5 bis 7,5 mm, und eine Länge von 10 bis 15 mm, bevorzugt von 11 bis 14 mm auf, die nach dem Pressvorgang durch mechanische Bearbeitung, wie Schneiden, Zerschlagen oder Zerdrücken, zu den Granulatteilchen zerkleinert werden können. An die Zerkleinerung kann sich eine Sichtung anschließen, die bei der Zerkleinerung entstandene, zu kleine und leichte Bestandteile aus dem Granulat aussortieren soll.

Die Form des Extrudats ist nicht besonders eingeschränkt. Im Falle einer viereckigen Querschnittsöffnung des Extruders weist das Extrudat bevorzugt eine Breite und Höhe jeweils in einem Bereich von 1 bis 8 mm, besonders bevorzugt von 2 bis 7,5 mm, und eine beliebige Länge auf. Bei der Verwendung einer runden Querschnittsöffnung hingegen beträgt der Durchmesser des Extrudats bevorzugt von 1,5 bis 5 mm, besonders bevorzugt von 2 bis 4 mm. Das Extrudat kann anschließend durch mechanische Bearbeitung, wie Schneiden, Zerschlagen oder Zerdrücken, zu den Granulatteilchen zerkleinert werden. An die Zerkleinerung kann sich eine Sichtung anschließen, die bei der Zerkleinerung entstandene, zu kleine und leichte Bestandteile aus dem Granulat aussortieren soll.

Einer weiteren Ausführungsform entsprechend beträgt die Schüttdichte der Einstreu 200 bis 800 g/l, bevorzugt 250 bis 750 g/l und besonders bevorzugt 450 bis 550 g/l. Durch die Verwendung von Chloriden, insbesondere Calciumchlorid, kann die Schüttdichte verringert werden. Durch die Zugabe von Calciumchlorid kann beispielsweise die Schüttdichte einer Einstreu, die aus Getreide und Gelbildner besteht, von 570 g/l auf 530 g/l reduziert werden.

Ein zweiter Aspekt der vorliegenden Erfindung betrifft die Verwendung der zuvor definierten Einstreu für die Aufnahme von Ausscheidungen von Tieren. Nach einer bevorzugten Ausführungsform wird die Einstreu für die Aufnahme von Tierurin verwendet. Das Tier, dessen Ausscheidungen aufgenommen werden, ist nicht besonders eingeschränkt. Gemäß einer bevorzugten Ausführungsform ist das Tier eine Katze.

Ein dritter Aspekt der vorliegenden Erfindung betrifft ein Verfahren zur Herstellung der Einstreu, umfassend die Schritte in der folgenden Reihenfolge:
(a) Bereitstellen einer Ausgangsmasse, bestehend aus
   65 bis 99,5 Gew.-% Getreidemehl,
   0,1 bis 20 Gew.-% eines Gelbildners, der aus mindestens einem Bestandteil der Gruppe, bestehend aus Guarkernmehl, Johannisbrotkernmehl, Tarakernmehl, Xanthan, Gellan, Karaya, Alginat, Agar, Carrageen, Gummi arabicum, Pektin, Traganth und Celluloseether, ausgewählt ist, und
   0,01 bis 15 Gew.-% eines Geruchsminderers, der aus mindestens einem Bestandteil der Gruppe, bestehend aus Chlorid und Säure, ausgewählt ist, wobei die vorstehenden Bestandteile immer jeweils 100 Gew.-% ausmachen,
(b) Pelletieren oder Extrudieren der Ausgangsmasse aus Schritt (a), und
(c) Zerkleinern der Pellets oder des Extrudats aus Schritt (b).

Das in dem Verfahren verwendete Getreidemehl, der Gelbildner und der Geruchsminderer entsprechen dem Getreidemehl, dem Gelbildner und dem Geruchsminderer der oben definierten Einstreu. Zudem weisen die Pellets bzw. das Extrudat des Verfahrens die oben genannten Eigenschaften der Pellets bzw. des Extrudats der Einstreu auf und können mit den zuvor beschriebenen Verfahren erhalten werden.

Gemäß einer Ausführungsform des erfindungsgemäßen Verfahrens kann ein Schritt (d) der Sichtung nach dem Schritt (c) durchgeführt werden, wobei bei der Zerkleinerung entstandene, zu kleine und leichte Bestandteile aus dem Granulat aussortiert werden.

Die erfindungsgemäße Einstreu zur Nutzung in der Tierhaltung ist vorteilhaft, da sie Klumpenbildung mit hoher Klumpenfestigkeit ermöglicht, eine geringe Verklebung an Tierhaaren verursacht und darüber hinaus eine hohe Geruchsbindungswirkung aufweist.

Die Figuren zeigen:
Figur 1 zeigt die Ammoniakentwicklung verschiedener Einstreue ("Vergleichsmuster", "Magnesiumchlorid in Pulverform (Pharma)", "Magnesiumchlorid in Schuppenform" und "Calciumchlorid").
Figur 2 stellt die Ammoniakentwicklung verschiedener Einstreue dar ("Vergleichsmuster", "Ascorbinsäure", "Zucker" und "Zitronensäure").
Figur 3 zeigt die Ammoniakentwicklung verschiedener Einstreue ("Vergleichsmuster", "CMC" und "Stockosorb").
Figur 4 stellt die Ammoniakentwicklung verschiedener Einstreue dar ("Vergleichsmuster", "NutraPro", "Sinodeen", "Orangenterpen" und "Zinkverbindung").

Die nachstehenden Beispiele dienen als weitere Erläuterungen der vorliegenden Erfindung, ohne darauf beschränkt zu sein.

Einstreu verschiedener Zusammensetzung (mit Angaben in Gew.-%) wurde mit Urin getränkt, woraufhin der Ammoniakgasgehalt der einzelnen Einstreue über die Zeit gemessen wurde.

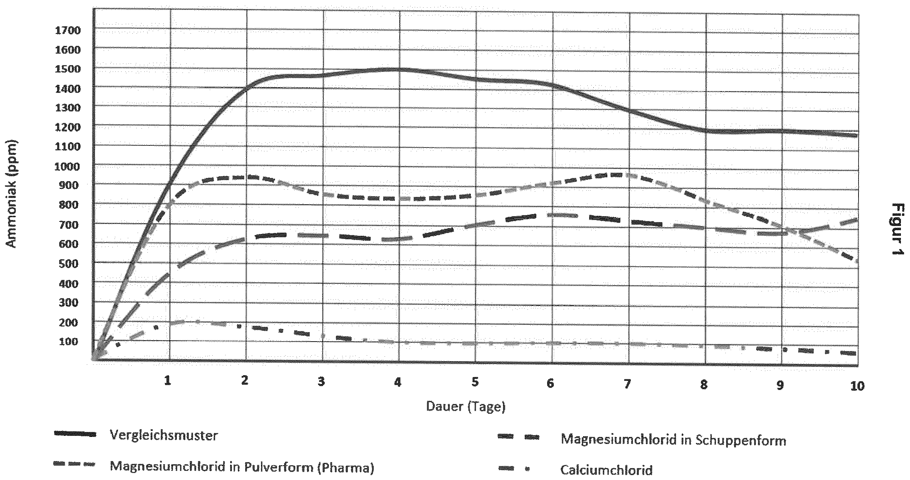

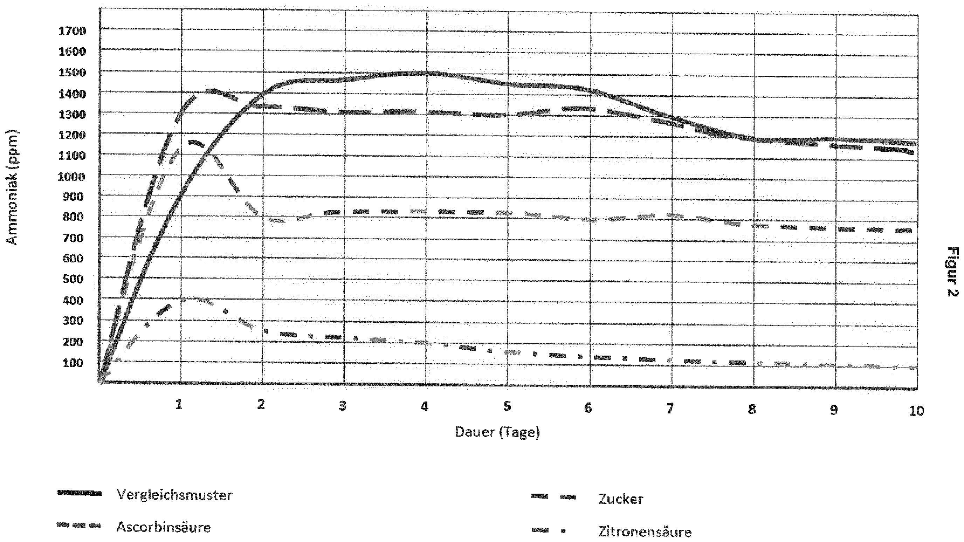

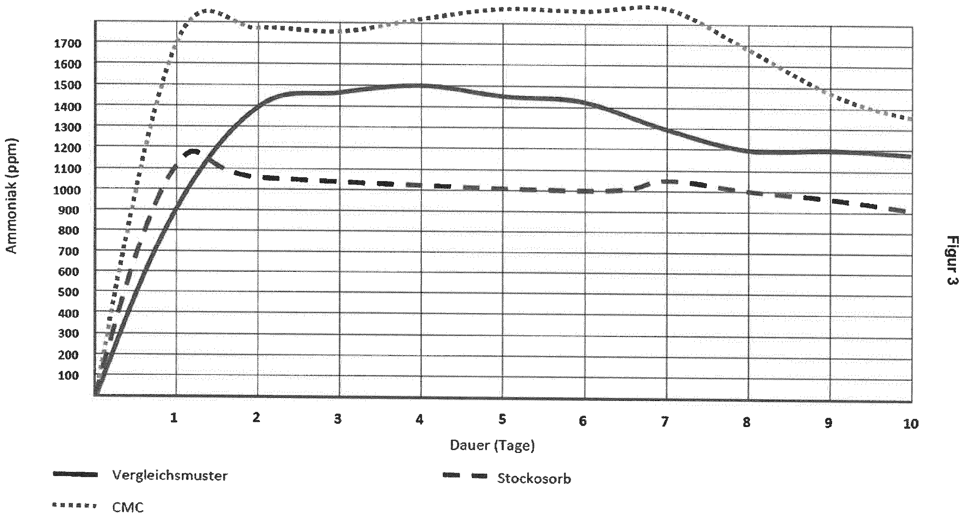

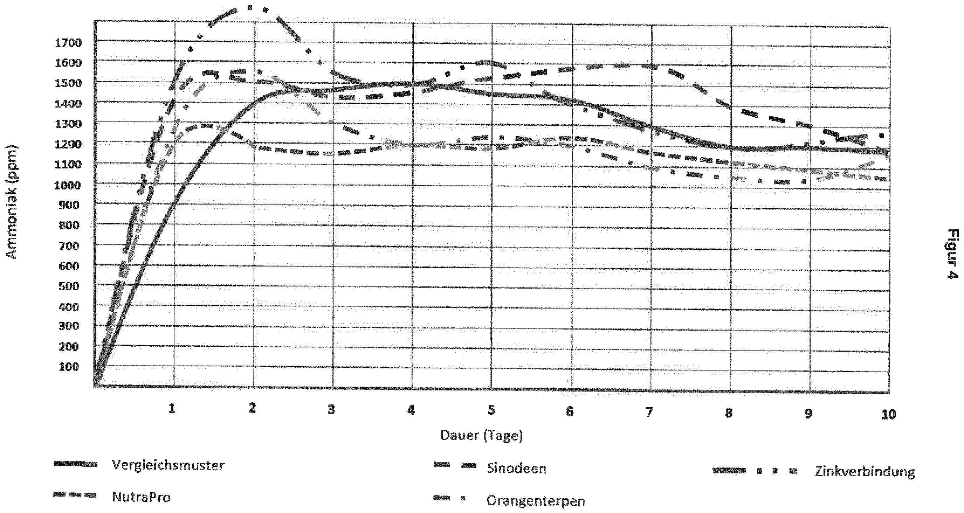

Dabei wurden folgende Einstreue eingesetzt:
"Vergleichsmuster" (vgl. Figuren 1 bis 4):
- 4% Guarkernmehl
- 96% Weizenmehl

Figur 1:
"Magnesiumchlorid in Pulverform (Pharma)"
   - 4% Guarkernmehl
   - 4% Magnesiumchlorid; Pulverform (Pharmaqualität)
   - 92% Weizenmehl
"Magnesiumchlorid in Schuppenform":
   - 4% Guarkernmehl
   - 4% Magnesiumchlorid in Schuppenform
   - 92% Weizenmehl
"Calciumchlorid":
   - 4% Guarkernmehl
   - 4% Calciumchlorid; Pulverform (Pharmaqualität)
   - 92% Weizenmehl

Figur 2:
"Ascorbinsäure":
   - 1% Ascorbinsäure
   - 4% Guarkernmehl
   - 95% Weizenmehl
"Zucker":
   - 4% Guarkernmehl
   - 4% Zucker
   - 92% Weizenmehl
"Zitronensäure":
   - 1% Zitronensäure
   - 4% Guarkernmehl
   - 95% Weizenmehl

Figur 3:
"CMC":
   - 4% Guarkernmehl
   - 4% Carboxylmethylcellulose 75aH/P50 der Firma Mikro-Technik
   - 92% Weizenmehl
"Stockosorb":
   - 4% Guarkernmehl
   - 1% Stockosorb® von Evonik
   - 95% Weizenmehl

Figur 4:
"NutraPro"
   - 4% Guarkernmehl
   - 0,6% NutraPro® (Bakterienmischung); in Wasser gelöst (0,6% Feststoff im Produkt gerechnet), auf das Endprodukt aus Guarkernmehl und Weizenmehl aufgesprüht
   - 95,4% Weizenmehl
"Sinodeen":
   - 4% Guarkernmehl
   - 2% Sinodeen® der Firma Sinodeen; auf das Endprodukt aus Guarkernmehl und Weizenmehl aufgesprüht
   - 94% Weizenmehl
"Orangenterpen":
   - 4% Guarkernmehl
   - 0,2% Orangenterpen; auf das Endprodukt aus Guarkernmehl und Weizenmehl aufgesprüht
   - 95,8% Weizenmehl
"Zinkverbind ung":
   - 4% Guarkernmehl
   - 0,2% Zinkverbindung von FRANCHEM® Sorb der Firma FrankenCHEMIE; auf das Endprodukt aus Guarkernmehl und Weizenmehl aufgesprüht
   - 95,8% Weizenmehl

Aus den Figuren 1 bis 4 lässt sich deutlich erkennen, dass die erfindungsgemäße Einstreu über eine herausragende Geruchsbindungswirkung verfügt. Die Einstreue "Zitronensäure" und "Calciumchlorid" weisen über die gesamte Versuchsdauer einen sehr geringen Ammoniakgasgehalt auf. Des Weiteren zeigen auch die Einstreue, die Magnesiumchlorid in Schuppen- oder Pulverform enthalten, und die Einstreu mit Ascorbinsäure einen deutlich geringeren Ammoniakgasgehalt als die Vergleichsbeispiele. Aufgrund der nur geringen Ammoniakentwicklung der erfindungsgemäßen Einstreue müssen nur kleine Mengen der Einstreu verwendet werden, um eine gute Geruchsbindung zu erreichen.

## Patentansprüche

1. Einstreu zur Nutzung in der Tierhaltung in der Form eines gepressten Granulats mit einer Partikelgröße von 0,1 bis 10 mm, bestehend aus 65 bis 99,5 Gew.-% Getreidemehl,
0,1 bis 20 Gew.-% eines Gelbildners, der aus mindestens einem Bestandteil der Gruppe, bestehend aus Guarkernmehl, Johannisbrotkernmehl, Tarakernmehl, Xanthan, Gellan, Karaya, Alginat, Agar, Carrageen, Gummi arabicum, Pektin, Traganth und Celluloseether, ausgewählt ist, und
0,01 bis 15 Gew.-% eines Geruchsminderers, der aus mindestens einem Bestandteil der Gruppe, bestehend aus Chlorid und Säure, ausgewählt ist, wobei die vorstehenden Bestandteile immer jeweils 100 Gew.-% ausmachen.

2. Einstreu nach Anspruch 1, wobei das Chlorid aus mindestens einem Bestandteil der Gruppe, bestehend aus Calciumchlorid, Magnesiumchlorid und Natriumchlorid, ausgewählt ist.

3. Einstreu nach Anspruch 1 oder 2, wobei die Säure aus mindestens einem Bestandteil der Gruppe, bestehend aus Ascorbinsäure, Weinsäure und Zitronensäure, ausgewählt ist.

4. Einstreu nach einem der Ansprüche 1 bis 3, wobei der Anteil des Gelbildners 3 bis 5 Gew.-% beträgt.

5. Einstreu nach einem der Ansprüche 1 bis 4, wobei der Gelbildner Guarkernmehl ist.

6. Einstreu nach einem der Ansprüche 1 bis 5, wobei der Anteil des Geruchsminderers 1 bis 6 Gew.-% beträgt.

7. Einstreu nach einem der Ansprüche 1 bis 6, wobei der Geruchsminderer Calciumchlorid und/oder Zitronensäure ist.

8. Einstreu nach Anspruch 7, wobei der Anteil von Calciumchlorid 3 bis 5 Gew.-% beträgt.

9. Einstreu nach Anspruch 7, wobei der Anteil von Zitronensäure 1 bis 3 Gew.-% beträgt.

10. Einstreu nach einem der Ansprüche 1 bis 8, wobei die Einstreu aus 90 bis 94 Gew.-% Getreidemehl, 3 bis 5 Gew.-% Guarkernmehl und 3 bis 5 Gew.-% Calciumchlorid besteht.

11. Einstreu nach einem der Ansprüche 1 bis 7 und 9, wobei die Einstreu aus 92 bis 96 Gew.-% Getreidemehl, 3 bis 5 Gew.-% Guarkernmehl und 1 bis 3 Gew.-% Zitronensäure besteht.

12. Einstreu nach einem der Ansprüche 1 bis 11, wobei das Getreidemehl mindestens ein Mehl eines Bestandteils der Gruppe, bestehend aus Weizen, Dinkel, Roggen, Gersten oder Triticale, ist.

13. Einstreu nach einem der Ansprüche 1 bis 12, wobei mehr als 2% der Einstreu in einem Sieb mit einer Siebgröße von 0,1 mm bis 1 mm verbleibt.

14. Verwendung der Einstreu nach einem der Ansprüche 1 bis 13 für die Aufnahme von Ausscheidungen von Tieren.

15. Verfahren zur Herstellung einer Einstreu nach einem der Ansprüche 1 bis 13, umfassend die Schritte in der folgenden Reihenfolge:
(a) Bereitstellen einer Ausgangsmasse, bestehend aus 65 bis 99,5 Gew.-% Getreidemehl,
0,1 bis 20 Gew.-% eines Gelbildners, der aus mindestens einem Bestandteil der Gruppe, bestehend aus Guarkernmehl, Johannisbrotkernmehl, Tarakernmehl, Xanthan, Gellan, Karaya, Alginat, Agar, Carrageen, Gummi arabicum, Pektin, Traganth und Celluloseether, ausgewählt ist, und
0,01 bis 15 Gew.-% eines Geruchsminderers, der aus mindestens einem Bestandteil der Gruppe, bestehend aus Chlorid und Säure, ausgewählt ist,
wobei die vorstehenden Bestandteile immer jeweils 100 Gew.-% ausmachen,
(b) Pelletieren oder Extrudieren der Ausgangsmasse aus Schritt (a), und
(c) Zerkleinern der Pellets oder des Extrudats aus Schritt (b).

## Claims

1. A bedding for use in animal husbandry in the form of a compressed granulate having a particle size of from 0.1 to 10 mm, consisting of
65 to 99.5 wt.% cereal flour,
0.1 to 20 wt.% of a gelling agent selected from at least one component of the group consisting of guar gum, carob gum, tara gum, xanthan gum, gellan gum, karaya gum, alginate, agar, carrageenan, gum arabic, pectin, gum tragacanth, and cellulose ether, and
0.01 to 15 wt.% of an odor reducing agent selected from at least one component of the group consisting of chloride and acid,
wherein the above components always amount to 100 wt.% in each case.

2. The bedding according to Claim 1, wherein the chloride is selected from at least one component of the group consisting of calcium chloride, magnesium chloride, and sodium chloride.

3. The bedding according to Claim 1 or 2, wherein the acid is selected from at least one component of the group consisting of ascorbic acid, tartaric acid, and citric acid.

4. The bedding according to any one of Claims 1 to 3, wherein the proportion of the gelling agent is 3 to 5 wt.%.

5. The bedding according to any one of Claims 1 to 4, wherein the gelling agent is guar gum.

6. The bedding according to any one of Claims 1 to 5, wherein the proportion of the odor reducing agent is 1 to 6 wt.%.

7. The bedding according to any one of Claims 1 to 6, wherein the odor reducing agent is calcium chloride and/or citric acid.

8. The bedding according to Claim 7, wherein the proportion of calcium chloride is 3 to 5 wt.%.

9. The bedding according to Claim 7, wherein the proportion of citric acid is 1 to 3 wt.%.

10. The bedding according to any one of Claims 1 to 8, wherein the bedding consists of 90 to 94 wt.% cereal flour, 3 to 5 wt.% guar gum and 3 to 5 wt.% calcium chloride.

11. The bedding according to any one of Claims 1 to 7 and 9, wherein the bedding consists of 92 to 96 wt.% cereal flour, 3 to 5 wt.% guar gum and 1 to 3 wt.% citric acid.

12. The bedding according to any one of Claims 1 to 11, wherein the cereal flour is at least one flour of a component of the group consisting of wheat, spelt, rye, barley, or triticale.

13. The bedding according to any one of Claims 1 to 12, wherein more than 2% of the bedding remains in a sieve having a sieve size of from 0.1 mm to 1 mm.

14. Use of the bedding according to any one of Claims 1 to 13 for absorbing animal excrement.

15. A method for producing bedding according to any one of Claims 1 to 13, comprising the steps of, in the following order:
(a) providing an initial mass, consisting of
65 to 99.5 wt.% cereal flour,
0.1 to 20 wt.% of a gelling agent selected from at least one component of the group consisting of guar gum, carob gum, tara gum, xanthan gum, gellan gum, karaya gum, alginate, agar, carrageenan, gum arabic, pectin, gum tragacanth, and cellulose ether, and
0.01 to 15 wt.% of an odor reducing agent selected from at least one component of the group consisting of chloride and acid,
wherein the above components always amount to 100 wt.% in each case,
(b) pelletizing or extruding the initial mass from step (a), and
(c) comminuting the pellets or the extrudate from step (b).

## Revendications

1. Litière à utiliser dans l'élevage sous la forme de granulats comprimés d'une taille de particule de 0,1 à 10 mm, comprenant 65 à 99,5 % en poids de farine de céréales, 0,1 à 20% en poids d'un agent gélifiant, qui est sélectionné à base au moins d'un constituant du groupe composé de gomme de guar, de farine de graines de caroube, de gomme tara, de xanthane, de gomme gellane, de karaya, d'alginate, d'agar, de carraghénanes, de gomme arabique, de pectine, de gomme adragante (tragacanthe) et d'éther de cellulose, et 0,01 à 15 % en poids d'un réducteur d'odeur, qui est sélectionné à base au moins d'un constituant du groupe composé de chlorure et d'acide, dans laquelle les constituants précédents représentent toujours respectivement 100 % en poids.

2. Litière selon la revendication 1, dans laquelle le chlorure est sélectionné à base au moins d'un constituant du groupe composé de chlorure de calcium, de chlorure de magnésium et de chlorure de sodium.

3. Litière selon la revendication 1 ou 2, dans laquelle l'acide est sélectionné à base au moins d'un constituant du groupe composé d'acide ascorbique, d'acide tartrique et d'acide citrique.

4. Litière selon l'une des revendications 1 à 3, dans laquelle la part de l'agent gélifiant est de 3 à 5 % en poids.

5. Litière selon l'une des revendications 1 à 4, dans laquelle l'agent gélifiant est de la gomme de guar.

6. Litière selon l'une des revendications 1 à 5, dans laquelle la part du réducteur d'odeur est de 1 à 6 % en poids.

7. Litière selon l'une des revendications 1 à 6, dans laquelle le réducteur d'odeur est du chlorure de calcium et / ou de l'acide citrique.

8. Litière selon la revendication 7, dans laquelle la part de chlorure de calcium est de 3 à 5 % en poids.

9. Litière selon la revendication 7, dans laquelle la part de l'acide citrique est de 1 à 3 % en poids.

10. Litière selon l'une des revendications 1 à 8, dans laquelle la litière est constituée de 90 à 94 % en poids de farine de céréales, de 3 à 5 % en poids de gomme de guar et de 3 à 5 % en poids de chlorure de calcium.

11. Litière selon l'une des revendications 1 à 7 et 9, dans laquelle la litière est constituée de 92 à 96 % en poids de farine de céréales, de 3 à 5 % en poids de gomme de guar et de 1 à 3 % en poids d'acide citrique.

12. Litière selon l'une des revendications 1 à 11, dans laquelle la farine de céréales est au moins une farine d'un constituant du groupe composé de blé, d'épeautre, de seigle, d'orge ou de triticale.

13. Litière selon l'une des revendications 1 à 12, dans laquelle plus de 2% de la litière reste dans un tamis à mailles de 0,1 mm à 1 mm.

14. Utilisation de la litière selon l'une des revendications 1 à 13 afin de recevoir les excréments d'animaux.

15. Procédé de fabrication d'une litière selon l'une des revendications 1 à 13, comprenant les étapes dans l'ordre suivant :
(a) la fourniture d'une masse initiale comprenant
65 à 99,5 % en poids de farine de céréales,
0,1 à 20% en poids d'un agent gélifiant, qui est sélectionné à base au moins d'un constituant du groupe composé de gomme de guar, de farine de graines de caroube, de gomme tara, de xanthane, de gomme gellane, de karaya, d'alginate, d'agar, de carraghénanes, de gomme arabique, de pectine, de gomme adragante (tragacanthe) et d'éther de cellulose, et
0,01 à 15 % en poids d'un réducteur d'odeur, qui est sélectionné à base au moins d'un constituant du groupe composé de chlorure et d'acide,
dans laquelle les constituants précédents représentent toujours respectivement 100 % en poids,
(b) la granulation ou l'extrusion de la masse initiale découlant de l'étape (a), et
(c) le broyage des granulés ou de l'extrudat découlant de l'étape (b).
